# FASCICULE DE BREVET EUROPEEN

(11) **EP 1 151 201 B1**
(45) Date de publication et mention de la délivrance du brevet: **02.05.2003**
(21) Numéro de dépôt: 00903752.4
(22) Date de dépôt: 08.02.2000
(51) Int. Cl.: F16B 2/10

(54) **DISPOSITIF POUR LA FIXATION D'UN ACCESSOIRE SUR UN SUPPORT ET SYSTEME MODULAIRE COMPRENANT UN TEL DISPOSITIF**
VORRICHTUNG ZUM BEFESTIGEN EINES ZUBEHÖRS AN EINEM TRÄGER UND MODULARES SYSTEM MIT EINER SOLCHEN VORRICHTUNG
DEVICE FOR FIXING AN ACCESSORY ONTO A SUPPORT AND MODULAR SYSTEM CONTAINING SAID DEVICE

(30) Priorité: 08.02.1999 FR 9901457; 08.02.1999 FR 9901459
(43) Date de publication de la demande: 07.11.2001
(73) Titulaire: Mediaperformances (S.A.), 92806 Puteaux (FR)
(72) Inventeur: DIETRICH, Emmanuel, F-78490 Montfort (FR)
(74) Mandataire: Breese, Pierre
(86) Numéro de dépôt international: FR0000296
(87) Numéro de publication internationale: WO00047902

(56) Documents cités:
- FR-A- 757 251
- US-A- 5 441 225

## Description

La présente invention concerne un dispositif pour la fixation d'un accessoire sur un support. Une des applications remarquables de ce dispositif est la fixation d'un support d'affichettes ou de coupons de remises sur les linéaires d'un supermarché. Un tel dispositif peut toutefois rencontrer de nombreuses autres applications, par exemple pour la fixation d'un luminaire sur un support quelconque, d'un outil de préhension sur un plateau de travail, ou encore d'un mobile décoratif sur un mobilier d'enfant.

Les dispositifs selon l'état de la technique sont généralement constitués de pinces présentant des mâchoires dont la forme est adaptée à une famille de supports. Il est de ce fait nécessaire de concevoir et de proposer une gamme étendue de dispositifs pour pouvoir répondre à toutes les situations.

On connaît dans l'état de la technique le brevet français FR751251 ou le brevet américain US5441225 concernant des supports à rotule pour appareil photographique, comportant deux mâchoires reliées entre elles par un organe de serrage.

Ces dispositifs de l'art antérieur présentent une capacité d'adaptation limitée, avec un seule degré de liberté dans le plan comprenant la rotule et la vis de serrage. Par ailleurs, le serrage de cette vis provoque simultanément la fermeture des mâchoires sur le support et l'immobilisation des mâchoires. Par ailleurs, le serrage ne s'effectue correctement que sur des supports plats.

Le but de l'invention est de répondre à cet inconvénient en proposant un dispositif pouvant s'adapter à toute sorte de support, aussi bien plat que cylindrique, avec ou sans rebord, et pour une fourchette d'épaisseur étendue. Un autre but de l'invention est de proposer une pince dont le coût d'industrialisation soit faible et dont l'utilisation soit facile.

A cet effet, l'invention concerne dans son acception la plus générale un dispositif universel conforme à la revendication 1.

Selon une variante de réalisation particulière, le dispositif est formé d'une seule pièce en matière plastique moulée présentant deux parties en forme de mâchoires emboîtables reliées par une partie élastique de liaison.

Avantageusement, l'une au moins des mâchoires présente à sa partie arrière un logement concave apte à coopérer avec un prolongement convexe prévu sur l'autre mâchoire.

Selon un mode de réalisation particulier, l'une au moins des mâchoires présente à sa partie arrière un logement concave apte à coopérer avec un prolongement convexe prévu sur l'autre mâchoire, le prolongement pouvant s'emboîter dans la cavité par un déplacement selon une direction perpendiculaire au plan de séparation des deux mâchoires, l'extrémité du prolongement concave venant coopérer avec la cavité concave pour former un pivot d'articulation des deux mâchoires emboîtées.

Selon un mode de réalisation préféré, chacune des mâchoires comportant une cavité concave et un prolongement convexe venant s'emboîter pour former le pivot d'articulation des mâchoires.

De préférence, la partie avant des mâchoires présente la forme d'un bec concave.

Avantageusement, la partie avant des mâchoires présente une concavité semi-cylindrique d'un premier rayon, et présente à sa partie avant une rainure d'un second rayon inférieur au premier rayon.

Selon une variante de mise en oeuvre, la partie arrière des mâchoires présente au moins une lumière pour le passage d'une tige de liaison prolongeant la rotule.

De préférence, la partie arrière des mâchoires présente une lumière permettant le basculement de la tige de liaison prolongeant la rotule avec un débattement avant serrage des mâchoires d'au moins 45°.

Selon une application particulière, la rotule est prolongée par une tige de liaison coudée présentant une première section de liaison avec la rotule, dont la longueur est déterminée pour permettre l'articulation par rapport aux mâchoires, un deuxième tronçon sensiblement perpendiculaire au premier tronçon et un troisième tronçon sensiblement perpendiculaire au deuxième tronçon, pour la liaison avec un support d'affichette.

Selon un mode de réalisation préféré, le support d'affichette présente au moins une fente pour recevoir une cannelure complémentaire d'une tige de liaison prolongeant la rotule.

L'invention concerne encore un système modulaire s'adaptant sur un tel support.

A cet effet, l'invention concerne dans son acception la plus générale un système modulaire pour la promotion sur le lieu de vente, caractérisé en ce qu'il est constitué par un dispositif de fixation pour la fixation du système sur un support, un premier bras coudé, un porte-coupons, et un deuxième bras coudé.

Avantageusement, le système comporte une tige de raccordement (306) présentant une section non circulaire pour la liaison des extrémités des bras coudés.

Selon un mode de réalisation avantageux, la tige de raccordement présentant une section en forme de « + », et en ce que l'une au moins des extrémités de chacun des bras coudés présente une lumière de forme complémentaire.

De préférence, le dispositif de fixation est formé d'une seule pièce en matière plastique moulée présentant deux parties en forme de mâchoires emboîtables reliées par une partie élastique de liaison.

Avantageusement, la partie avant du dispositif de fixation présente la forme d'un bec concave.

Selon une variante, la partie arrière du dispositif de fixation présente au moins une lumière pour le passage d'une tige de liaison prolongeant la rotule.

L'invention sera mieux comprise à la lecture des dessins annexés relatifs à un exemple non limitatif de réalisation où :
- la figure 1 représente une vue d'un ensemble porte-coupons comportant le dispositif selon l'invention ;
- les figures 2 et 3 représentent des vues respectivement de dessous et de dessus de la première mâchoire ;
- les figures 4 et 5 représentent des vues respectivement de dessous et de dessus de la deuxième mâchoire ;
- la figure 6 représente une vue du porte-coupons ;
- la figure 7 représente une vue de détail de la tige de liaison ;
- la figure 8 représente une vue du deuxième bras de liaison ;
- la figure 9 représente une vue éclatée d'une variante de réalisation d'un système modulaire selon l'invention ;
- la figure 10 représente une vue détaillé d'une variante de porte-coupons ;
- la figure 11 représente une variante de la plaque porte-coupons ;
- les figure 12 et 13 représentent des variantes de réalisation de la pince ;
- les figures 14 à 16 représentent les trois parties constitutives du boîtier d'éclairage.

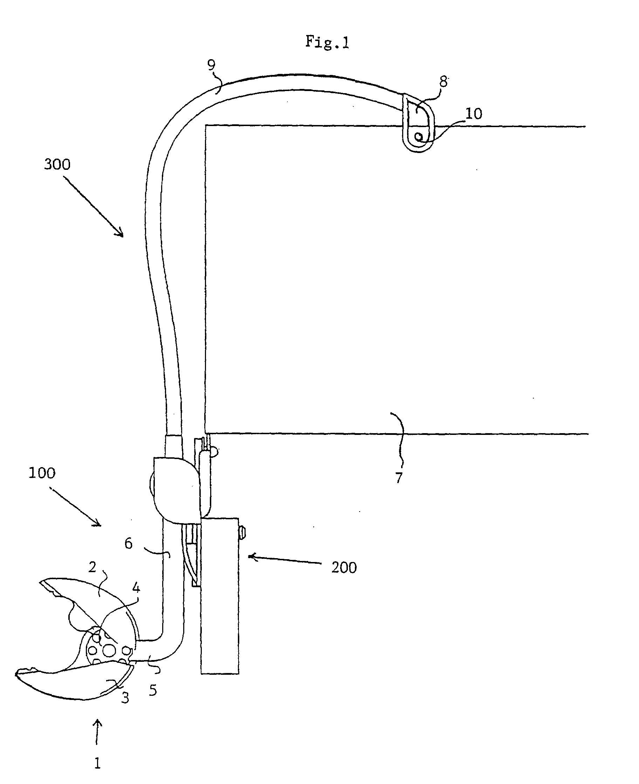

La figure 1 représente un exemple d'application du dispositif de fixation universel pour le support de coupons de remise. Le dispositif de fixation (1) est destiné à s'ajuster à tout type de support par exemple une étagère plate, une console avec un rebord, un support tubulaire ou la face verticale d'un linéaire.

Le support de coupons est composé de plusieurs éléments raccordables entre eux de façon modulaire :
- un dispositif de fixation (1) ;
- un premier bras coudé (100) ;
- un porte-coupons (200) ;
- un deuxième bras coudé (300).

Le dispositif de fixation (1) comprend deux mâchoires (2, 3) coopérant avec une rotule (4). Il sera décrit plus en détail par la suite.

La rotule (4) est une pièce sphérique en matière plastique prolongée par une courte tige de liaison (5) dont la longueur est déterminée pour permettre le passage à travers une lumière prévue à cet effet sur les mâchoires (2, 3). Elle est prolongée par un deuxième tronçon (6) formant un angle d'environ 90° avec le premier tronçon. Le porte-coupons présente un plateau (7) supporté par un bras coudé (9) par l'intermédiaire d'une pièce de liaison (8) articulée par rapport à la partie supérieure du plateau (7) par un pivot (10).

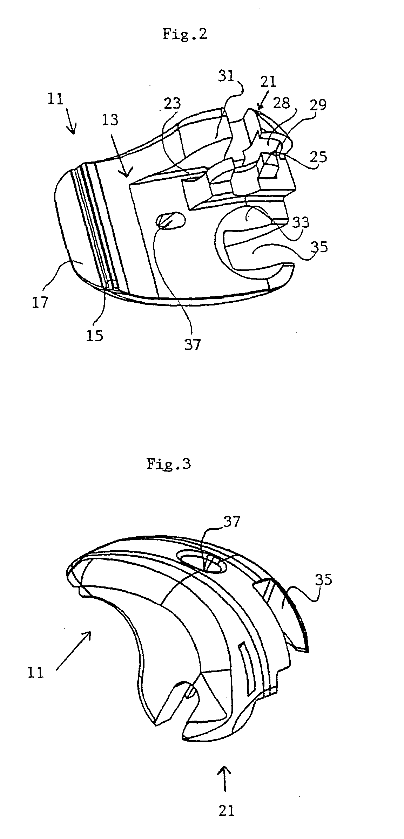

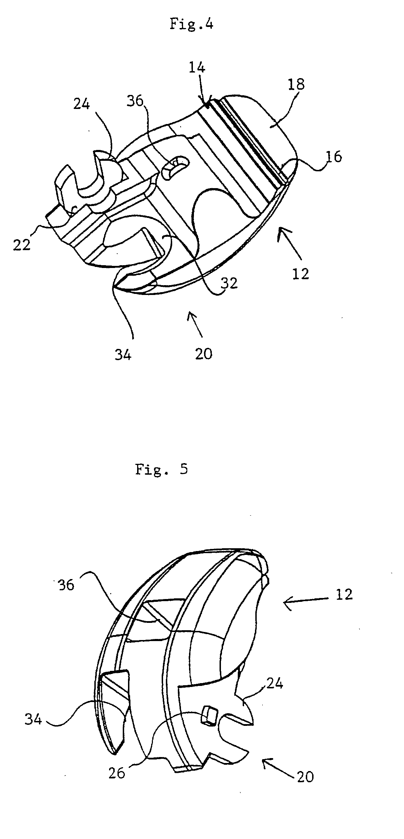

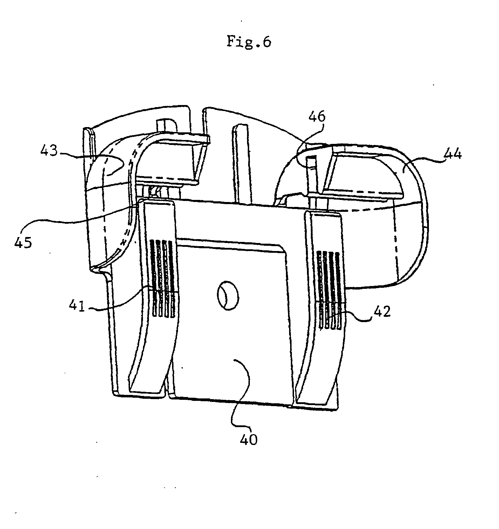

Les mâchoires sont représentées en détail en figures 2 et 3 représentent des vues respectivement de dessous et de dessus de la première mâchoire et en figures 4 et 5 représentent des vues respectivement de dessous et de dessus de la deuxième mâchoire.

Les deux mâchoires présentent à l'avant un bec (11, 12) dont la surface intérieure est concave et semi-cylindrique (13, 14). Les mâchoires, ainsi que la cavité de la partie arrière destinée à recevoir la rotule, peuvent être réalisées en un élastomère qui est co-injecté dans les mâchoires. L'élastomère forme ainsi un siège déformable élastiquement, permettant d'assurer un serrage optimum des mâchoires sur le support d'une part et sur la rotule d'autre part.

La partie avant des becs présente une rainure (15, 16) et, à l'avant, un prolongement plat (17, 18).

La partie arrière des mâchoires présente des moyens d'articulation (20, 21) complémentaires. Ces moyens d'articulation (20, 21) sont décalés latéralement. Ils sont constitués par une alternance de cavités (22, 23) et de protubérances (24, 25) venant s'encastrer pour former un pivot. L'une des mâchoires présente sur la face extérieure un ergot (26) placé à la verticale de l'axe de pivotement. Cet ergot permet l'assemblage des deux mâchoires par un déplacement relatif perpendiculaire au plan de séparation des deux mâchoires, puis un guidage par le déplacement en rotation de cet ergot (26) par rapport à un chemin de guidage (27) délimité par un rebord courbe en arc de cercle (29) sur la face intérieure (31) de l'autre mâchoire.

La partie arrière des mâchoires présente par ailleurs des cavités semi-sphériques (32, 33) apte à recevoir la rotule. Ces cavités se prolongent par des lumières (34, 35) permettant le passage de la tige de liaison de la rotule.

Ces cavités (32, 33) présentent des lèvres annulaires saillantes venant recouvrir le bord de l'élastomère pour le protéger contre les dégradations mécaniques.

Le serrage des deux mâchoires s'effectue à l'aide d'une vis et d'un écrou traversant des lumières (36, 37) disposés entre les moyens d'articulation d'une part et les cavités (34, 35) recevant la rotule d'autre part, et entre le bec formant la partie avant, et la partie arrière des mâchoires. Le serrage assure ainsi dans un premier temps le pincement du bec sur le support sur laquelle le dispositif est placé, puis, lorsque le pincement des becs sur le support atteint une certaine puissance, la poursuite du serrage assure le blocage des cavités de la partie arrière sur la rotule pour empêcher son pivotement. Le dispositif peut ainsi être totalement bloqué par une seule action de vissage.

La partie arrière des deux mâchoires peut être reliée par un ruban élastique assurant l'ouverture au repos.

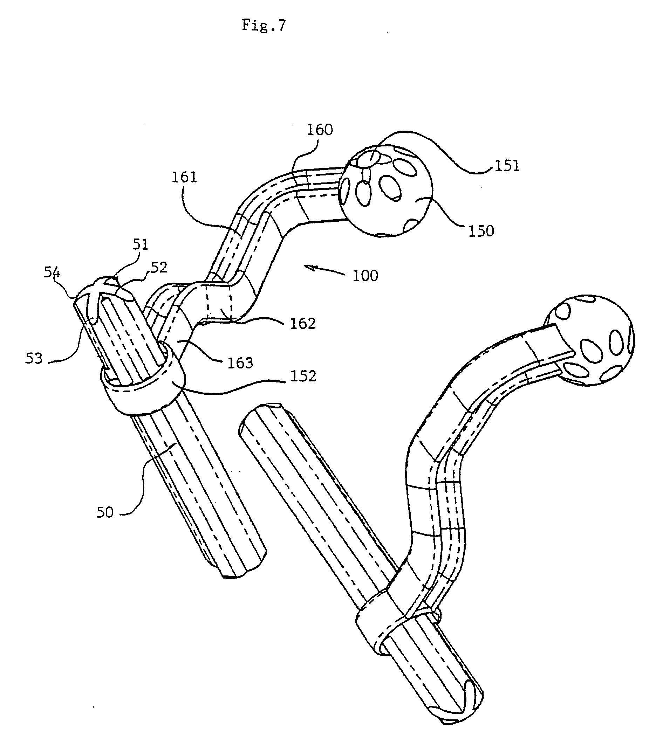

La figure 6 représente une vue du porte-coupons. Il est formé par une platine (40) prolongé à la face arrière par deux lames ressorts (41, 42). La face avant sert à recevoir les coupons. La platine présente deux prolongements (43, 44) munis de fentes (45, 46) s'étendant dans un plan parallèle à la platine (40). Ces fentes sont destinées à coopérer avec une tige de liaison présentant une section multi-cannelée comme montrée en figure 7 représente une vue de détail de la tige de liaison.

La tige de liaison (50) présente quatre cannelures (51 à 54) formant une section en forme de "+". La liaison entre la tige (50) et le porte-coupons s'effectue par l'insertion d'une cannelure (51) dans les fentes (43, 44). Les lames (41, 42) produisent un frottement empêchant le désassemblage inopiné de la tige et du porte-coupons.

Cette tige (50) est supportée par un bras coudé (100) présentant à l'une de ses extrémités une rotule (150) présentant une lumière en forme de « + », et à l'autre extrémité une bague (152) présentant une lumière pour le positionnement de la tige (50). Le bras coudé (100) est rigide. Il est destiné à être immobilisé dans la pince précédemment décrite.

Elle présente un premier tronçon (160) prolongeant radialement la rotule (150), un deuxième tronçon (161) perpendiculaire, un troisième tronçon (162) formant un angle d'environ 30° avec le plan des deux premiers tronçons, et un quatrième tronçon (163), dans le plan des trois tronçons précédents, parallèle au deuxième tronçon. Le décalage résultant de cette forme coudée permet d'équilibrer la tige (50) lorsque le deuxième bras coudé est fixé sur la tige (50).

Ce mode de réalisation associant une tige multi-cannelée, une tige de liaison à courbures multiples et une rotule de liaison avec la pince de fixation, permet une très grande variété de configuration et de modes d'utilisation, tout en respectant un bon équilibre des forces s'exerçant sur le dispositif, et une harmonie des lignes d'orientation du mobilier support, du porte-coupons et des éléments du dispositif de fixation.

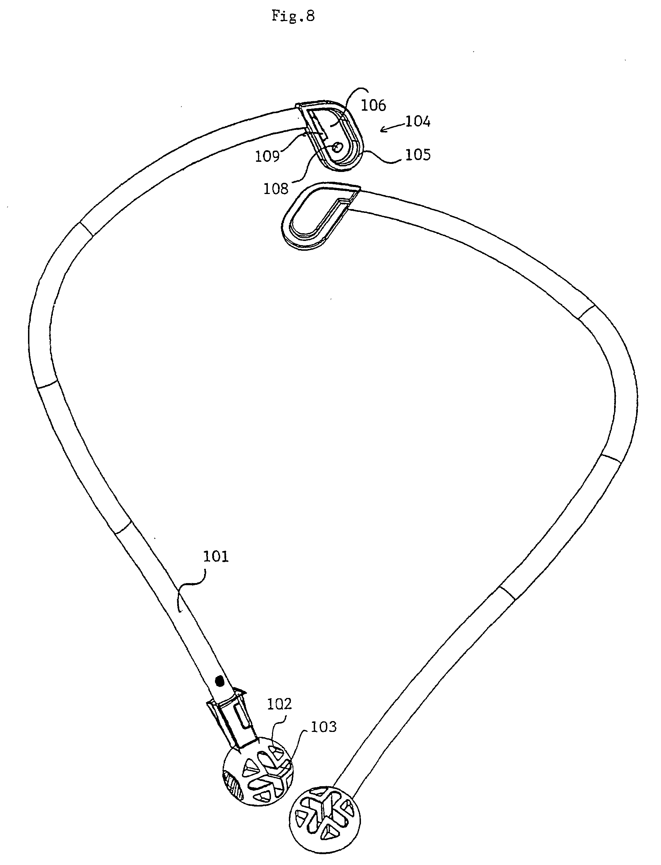

La figure 8 représente une vue du deuxième bras de liaison. Ce bras de liaison est réalisé en un matériau souple de façon à permettre une déformation élastique en cas de choc. L'une des extrémités de la tige flexible (101) est muni d'une sphère d'accouplement (102) présentant une lumière transversale (103) en forme de « + ». Cette cavité (103) présente une forme complémentaire à la section de la tige (50) de façon à permettre le raccordement sur la tige de liaison (50).

L'autre extrémité de la tige flexible (101) est munie d'une pince (104) pour l'accrochage d'une affichette. Cette pince (104) est formée d'un fond plein (106) présentant un téton (108). Un arceau (105) délimite avec le fond (105) un espace correspondant sensiblement à l'épaisseur de l'affichette. Eventuellement, une zone protubérante (109) prévue sur le fond (106) empêche le basculement de l'affichette suspendue par le téton (108).

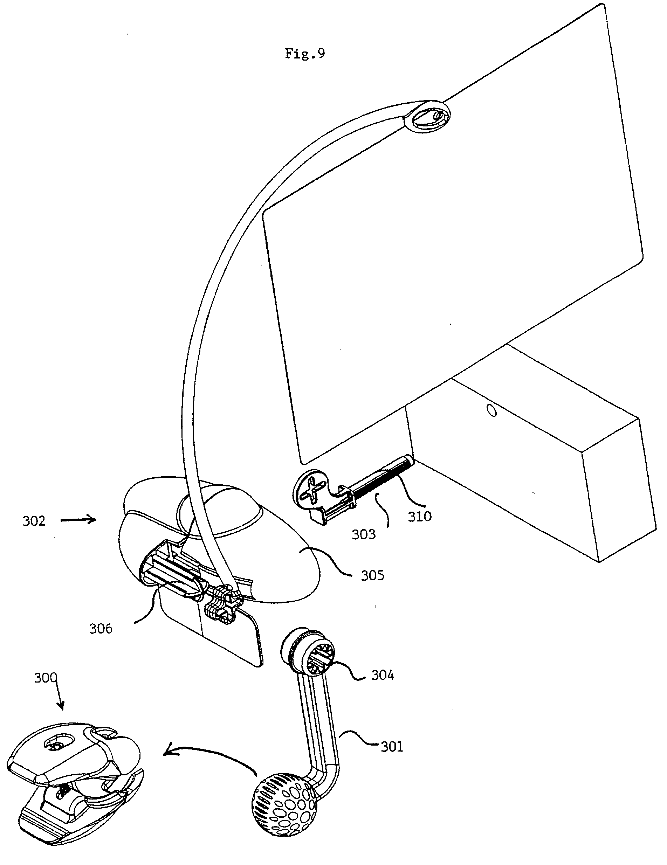

La figure 9 représente une vue éclatée d'une variante de réalisation d'un système modulaire selon l'invention

Il comprend :
- un dispositif universel de fixation (300)
- un premier bras coudé (301)
- un support de coupons et d'affichettes (302)
- un porte-coupons (303).

Le bras coudé (301) présente dans l'exemple décrit une lumière (304) en forme de deux croix décalées angulairement de 45 °, permettant d'augmenter le nombre de positions possibles.

Le support de coupons (302) présente un boîtier (305) lumineux dans lequel peut être logé une ou plusieurs piles d'alimentation, ainsi qu'une ou plusieurs ampoules ou diodes électroluminescentes. Il présente par ailleurs une tige de couplage (306) dont la section est en forme de croix, destinée à recevoir le bras coudé (301) pour la liaison avec le dispositif de fixation (300) et avec le porte-coupons (303) d'autre part.

Le porte-coupons (303) présente une sapinette crantée (310) sur laquelle vient se positionner un carnet de coupons perforés.

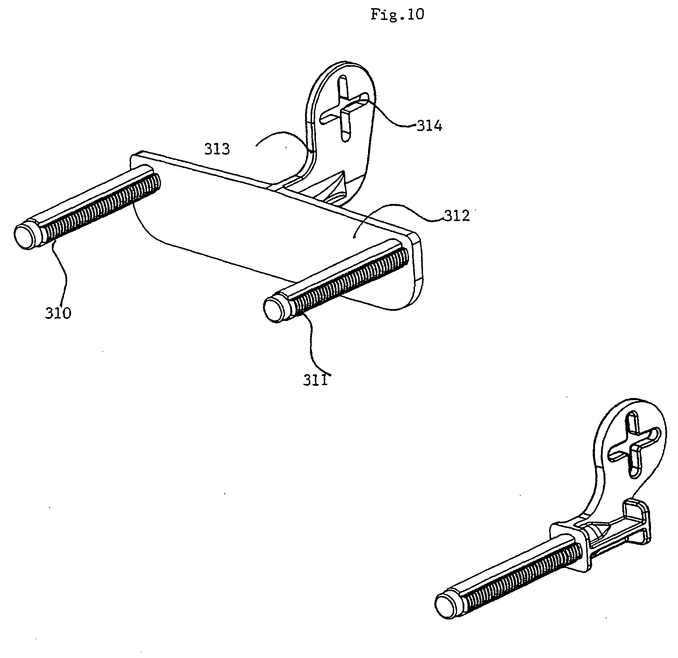

la figure 10 représente une vue détaillée d'une variante de porte-coupons.

Selon cette variante, le porte coupons présente un boîtier (320) pouvant être fermé par une coque (321) de forme complémentaire. Ce boîtier est destiné à recevoir deux piles. Il est réalisé au moins partiellement en un matériau transparent ou translucide.

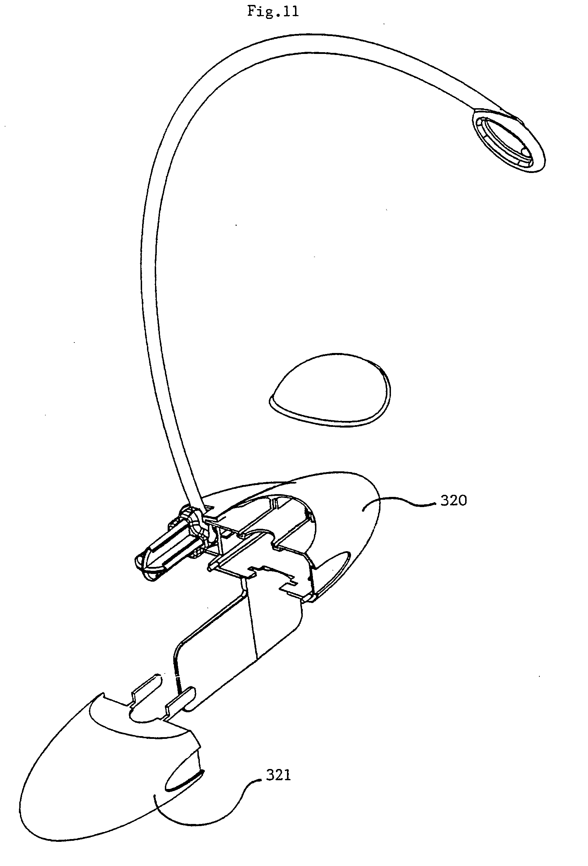

la figure 11 représente une variante de la plaque porte-coupons.

Le support de coupons selon cette variante présente deux tiges crantées (310, 311) de type "sapinette" parallèles et montés sur une plaque de liaison (312) prolongée par un bras (313) présentant une lumière (314) pour l'adaptation sur la tige (306) du support (302).

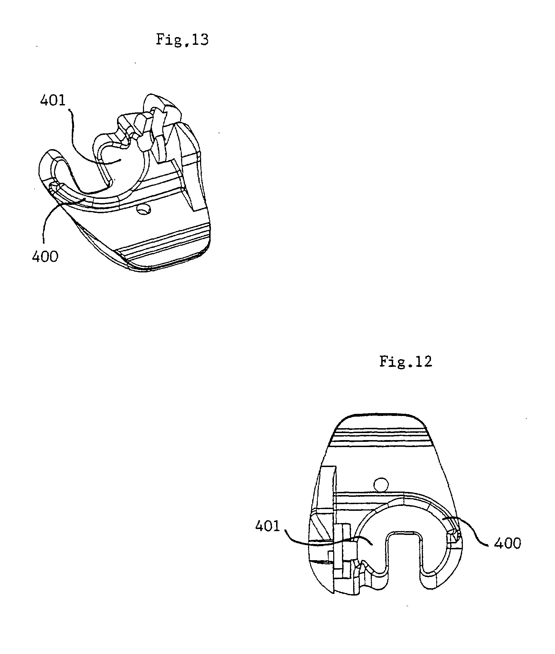

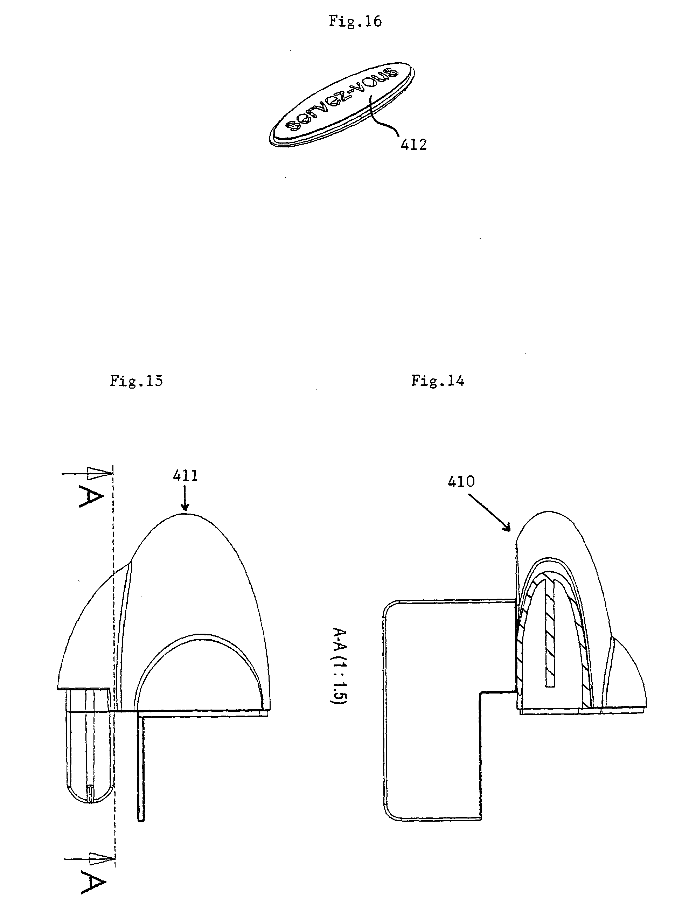

La figure 12 et 13 représentent des variantes de réalisation de la pince, dans laquelle la cavité (401) hémisphérique revêtue d'une surface en élastomère est protégée par une bordure (400) en plastique rigide.

Les figures 14 à 15 représentent des vues des composants du boîtier d'éclairage, formé de deux coques (410, 411) complémentaires raccordables raccordées par une pièce de liaison (412) à de forme ovale supportant un texte informatif, et assurant le verrouillage des deux coques (410, 411).

## Revendications

1. Dispositif universel pour la fixation d'un accessoire sur un support, formé par une pince présentant deux mâchoires (2, 3) articulées **caractérisé en ce que** l'articulation est décalée latéralement par rapport au plan médian et **en ce que** les mâchoires (2, 3) présentent des cavités destinées à recevoir une rotule (4), disposées de l'autre coté du plan transversal médian, le dispositif comportant par ailleurs des moyens de serrage assurant le rapprochement du bec (11, 12) des mâchoires (2, 3) et le resserrement sur la rotule (4) de la partie arrière des mâchoires (2, 3) portant les cavités, ces moyens de serrage étant disposés entre les moyens d'articulation et les cavités destinées à recevoir la rotule (4) d'une part, et entre le bec (11, 12) des mâchoires (2, 3) et la partie arrière des mâchoires (2, 3) d'autre part.

2. Dispositif universel pour la fixation d'un accessoire sur un support, selon la revendication 1 **caractérisé en ce qu'**il est formé d'une seule pièce en matière plastique moulée présentant deux parties en forme de mâchoires (2, 3) emboîtables reliées par une partie élastique de liaison.

3. Dispositif universel pour la fixation d'un accessoire sur un support, selon la revendication 1 ou 2 **caractérisé en ce que** l'une au moins des mâchoires (2, 3) présente à sa partie arrière un logement concave apte à coopérer avec un prolongement convexe prévu sur l'autre mâchoire.

4. Dispositif universel pour la fixation d'un accessoire sur un support, selon la revendication 3 **caractérisé en ce que** l'une au moins des mâchoires (2, 3) présente à sa partie arrière un logement concave apte à coopérer avec un prolongement convexe prévu sur l'autre mâchoire, le prolongement pouvant s'emboîter dans la cavité par un déplacement selon une direction perpendiculaire au plan de séparation des deux mâchoires (2, 3), l'extrémité du prolongement concave venant coopérer avec la cavité concave pour former un pivot d'articulation des deux mâchoires (2, 3) emboîtées.

5. Dispositif universel pour la fixation d'un accessoire sur un support, selon la revendication 3 **caractérisé en ce que** chacune des mâchoires (2, 3) comportant une cavité concave et un prolongement convexe venant s'emboîter pour former le pivot d'articulation des mâchoires (2, 3).

6. Dispositif universel pour la fixation d'un accessoire sur un support, selon la revendication 1 **caractérisé en ce que** la partie avant des mâchoires (2, 3) présente la forme d'un bec (11, 12) concave.

7. Dispositif universel pour la fixation d'un accessoire sur un support, selon la revendication 5 **caractérisé en ce que** la partie avant des mâchoires (2, 3) présente une concavité semi-cylindrique d'un premier rayon, et présente à sa partie avant une rainure d'un second rayon inférieur au premier rayon.

8. Dispositif universel pour la fixation d'un accessoire sur un support, selon la revendication 1 **caractérisé en ce que** la partie arrière des mâchoires (2, 3) présente au moins une lumière pour le passage d'une tige de liaison prolongeant la rotule (4).

9. Dispositif universel pour la fixation d'un accessoire sur un support, selon la revendication 1 **caractérisé en ce que** la partie arrière des mâchoires (2, 3) présente une lumière permettant le basculement de la tige de liaison prolongeant la rotule (4) avec un débattement avant serrage des mâchoires (2, 3) d'au moins 45°, dans au moins deux plans perpendiculaires.

10. Dispositif universel pour la fixation d'un accessoire sur un support, selon la revendication 1 **caractérisé en ce que** la rotule (4) est prolongée par une tige de liaison coudée présentant une première section de liaison avec la rotule (4), dont la longueur est déterminée pour permettre l'articulation par rapport aux mâchoires (2, 3) de la pince, une deuxième tronçon sensiblement perpendiculaire au premier tronçon et un troisième tronçon sensiblement perpendiculaire au deuxième tronçon, pour la liaison avec un support d'affichette.

11. Dispositif universel pour la fixation d'un accessoire sur un support, selon la revendication 1 **caractérisé en ce que** le support d'affichette présente au moins une fente pour recevoir une cannelure complémentaire d'une tige de liaison prolongeant la rotule (4).

12. Dispositif universel pour la fixation d'un accessoire sur un support, selon la revendication 1 **caractérisé en ce que** les deux mâchoires (2, 3), ainsi que la cavité de la partie arrière destinée à recevoir la rotule (4), sont réalisées en un élastomère co-injecté dans les mâchoires (2, 3) pour former un siège déformable élastiquement.

13. Système modulaire pour la promotion sur le lieu de vente, **caractérisé en ce qu'**il est constitué par un dispositif de fixation (1) conforme à l'une au moins des revendications précédentes pour la fixation du système sur un support, un premier bras coudé (100), un porte-coupons (200), et un deuxième bras coudé (300).

14. Système modulaire pour la promotion sur le lieu de vente, selon la revendication 13 **caractérisé en ce qu'**il comporte une tige de raccordement présentant une section non circulaire pour la liaison des extrémités des bras coudés.

15. Système modulaire pour la promotion sur le lieu de vente, selon la revendication 14 **caractérisé en ce que** la tige de raccordement présentant une section en forme de « + », et **en ce que** l'une au moins des extrémités de chacun des bras coudés (100, 300) présente une lumière de forme complémentaire.

16. Système modulaire pour la promotion sur le lieu de vente, selon la revendication 15 **caractérisé en ce qu'**il est formé d'une seule pièce en matière plastique moulée présentant deux parties en forme de mâchoires (2, 3) emboîtables reliées par une partie élastique de liaison.

17. Système modulaire pour la promotion sur le lieu de vente, selon la revendication 13 **caractérisé en ce que** le bras coudé présente un premier tronçon (160) prolongeant radialement la rotule (4) (150), un deuxième tronçon (161) perpendiculaire, un troisième tronçon (162) formant un angle d'environ 30° avec le plan des deux premiers tronçons, et un quatrième tronçon (163), dans le plan des trois tronçons précédents, parallèle au deuxième tronçon.

18. Système modulaire pour la promotion sur le lieu de vente, selon la revendication 13 **caractérisé en ce que** l'un des bras coudé est flexible.

19. Système modulaire pour la promotion sur le lieu de vente, selon la revendication 13 **caractérisé en ce que** la liaison entre le bras coudé (301), la tige (306) et le bras support de coupons (310) est réalisé par des éléments complémentaires présentant une section à au moins 4 bras.

## Patentansprüche

1. Universalvorrichtung zur Befestigung eines Zubehörteiles auf einem Träger, bestehend aus einem Greifer, der zwei gelenkig gelagerte Spannbacken (2, 3) aufweist, **dadurch gekennzeichnet, dass** das Gelenk im Vergleich zur Mittelebene seitlich versetzt angeordnet ist und dass die Spannbacken (2, 3) Vertiefungen aufweisen, die für die Aufnahme eines Kugelgelenkes (4) bestimmt sind und sich die auf der anderen Seite der queren Mittelebene befinden. Die Vorrichtung weist außerdem Spannmittel auf, die die Einstellung des Schnabels (11, 12) der Spannbacken (2, 3) garantiert, sowie das Nachspannen auf dem Kugelgelenk (4) des hinteren Teils der Spannbacken (2, 3), welcher die Vertiefungen enthält. Diese Spannmittel sind einerseits zwischen den Gelenkmitteln und den für die Aufnahme des Kugelgelenkes (4) bestimmten Vertiefungen angeordnet und andererseits zwischen dem Schnabel (11, 12) der Spannbacken (2, 3) und dem hinteren Teil der Spannbacken (2, 3).

2. Universalvorrichtung zur Befestigung eines Zubehörteiles auf einem Träger nach Anspruch 1, **dadurch gekennzeichnet, dass** sie aus einem einzigen Teil aus geformtem Kunststoff besteht, das zwei Teile in Form von Spannbacken (2, 3) aufweist, die ineinandergeschoben werden können und durch ein elastisches Verbindungsteil verbunden sind.

3. Universalvorrichtung zur Befestigung eines Zubehörteiles auf einem Träger nach Anspruch 1 oder 2, **dadurch gekennzeichnet, dass** mindestens eine der Spannbacken (2, 3) auf ihrem hinteren Teil eine konkave Unterbringung aufweist, die mit einer konvexen Verlängerung, die auf der anderen Spannbacke vorgesehen ist, zusammenzuarbeiten kann.

4. Universalvorrichtung zur Befestigung eines Zubehörteiles auf einem Träger nach Anspruch 3, **dadurch gekennzeichnet, dass** mindestens eine der Spannbacken (2, 3) au ihrem hinteren Teil eine konkave Unterbringung aufweist, die mit einer konvexen Verlängerung, die auf der anderen Spannbacke vorgesehen ist, zusammenzuarbeiten kann, wobei die Verlängerung in die Vertiefung passt, durch eine Verschiebung in einer Richtung, senkrecht zur Trennebene der beiden Spannbacken (2, 3), wobei das Ende der konkaven Verlängerung mit der konkaven Vertiefung zusammenarbeitet, um einen Gelenkzapfen der beiden ineinandergeschobenen Spannbacken (2, 3) zu bilden.

5. Universalvorrichtung zur Befestigung eines Zubehörteiles auf einem Träger nach Anspruch 3, **dadurch gekennzeichnet, dass** jede der Spannbacken (2, 3) eine konkave Vertiefung und eine konvexe Verlängerung aufweist, die ineinander geschoben werden, um den Gelenkzapfen der Spannbacken (2, 3) zu bilden.

6. Universalvorrichtung zur Befestigung eines Zubehörteiles auf einem Träger nach Anspruch 1, **dadurch gekennzeichnet, dass** der vordere Teil der Spannbacken (2, 3) die Form eines konkaven Schnabels (11, 12) aufweist.

7. Universalvorrichtung zur Befestigung eines Zubehörteiles auf einem Träger nach Anspruch 5, **dadurch gekennzeichnet, dass** der vordere Teil der Spannbacken (2, 3) eine halb-zylindrische Konkavität mit einem ersten Radius aufweist und an seinem vorderen Teil eine Nut mit einem zweiten Radius, der kleiner als der erste Radius ist.

8. Universalvorrichtung zur Befestigung eines Zubehörteiles auf einem Träger nach Anspruch 1, **dadurch gekennzeichnet, dass** der hintere Teil der Spannbacken (2, 3) mindestens einen Schlitz für die Durchführung einer das Kugelgelenk (4) verlängernden Verbindungsstange aufweist.

9. Universalvorrichtung zur Befestigung eines Zubehörteiles auf einem Träger nach Anspruch 1, **dadurch gekennzeichnet, dass** der hintere Teil der Spannbacken (2, 3) einen Schlitz aufweist, der das Kippen der Verbindungsstange, die das Kugelgelenk (4) verlängert, ermöglicht, mit einer Bewegung vor Einspannung der Spannbacken (2, 3) von mindestens 45° in mindestens zwei senkrechten Ebenen.

10. Universalvorrichtung zur Befestigung eines Zubehörteiles auf einem Träger nach Anspruch 1, **dadurch gekennzeichnet, dass** das Kugelgelenk (4) durch eine abgewinkelte Verbindungsstange verlängert wird, die einen ersten Verbindungsabschnitt mit dem Kugelgelenk (4) aufweist, dessen Länge festgelegt wurde, um die Gelenkverbindung gegenüber den Spannbacken (2, 3) des Greifers zu ermöglichen, einen zweiten Abschnitt, wesentlich senkrecht zum ersten Abschnitt und einen dritten Abschnitt wesentlich senkrecht zum zweiten Abschnitt für die Verbindung mit einem Anzeigenträger.

11. Universalvorrichtung zur Befestigung eines Zubehörteiles auf einem Träger nach Anspruch 1, **dadurch gekennzeichnet, dass** der Anzeigenträger mindestens einen Schlitz zur Aufnahme einer zusätzlichen Auskehlung eines das Kugelgelenk (4) verlängernden Verbindungsstabes aufweist.

12. Universalvorrichtung zur Befestigung eines Zubehörteiles auf einem Träger nach Anspruch 1, **dadurch gekennzeichnet, dass** die beiden Spannbacken (2, 3) sowie die Vertiefung des hinteren Teils, der für die Aufnahme des Kugelgelenkes (4) bestimmt ist, aus einem Elastomer hergestellt wurden, das zur Bildung einer elastisch verformbaren Unterbringung in die Spannbacken (2, 3) gespritzt wurde.

13. Modulsystem zur Verkaufsförderung am Verkaufsort, **dadurch gekennzeichnet, dass** es aus einer Befestigungsvorrichtung (1), die mindestens einem der vorhergehenden Ansprüche entspricht, für die Befestigung des Systems auf einem Träger, einem ersten abgewinkelten Arm (100), einem Kupon-Kasten (200) und einem zweiten abgewinkelten Arm (300) besteht.

14. Modulsystem zur Verkaufsförderung am Verkaufsort, nach Anspruch 13, **dadurch gekennzeichnet, dass** es aus einer Verbindungsstange besteht, die einen nichtkreisförmigen Querschnitt für die Verbindung der Enden der abgewinkelten Arme aufweist.

15. Modulsystem zur Verkaufsförderung am Verkaufsort, nach Anspruch 14, **dadurch gekennzeichnet, dass** die Verbindungsstange einen Querschnitt in Form von «+» aufweist und dass mindestens eines der Enden jedes abgewinkelten Armes (100, 300) einen Schlitz mit ergänzender Form aufweist.

16. Modulsystem zur Verkaufsförderung am Verkaufsort, nach Anspruch 15, **dadurch gekennzeichnet, dass** es aus einem einzigen Teil aus geformtem Kunststoff besteht, das zwei Teile in Form von Spannbacken (2, 3) aufweist, die ineinandergeschoben werden können und durch ein elastisches Verbindungsteil verbunden sind.

17. Modulsystem zur Verkaufsförderung am Verkaufsort, nach Anspruch 13, **dadurch gekennzeichnet, dass** der abgewinkelte Arm einen ersten Abschnitt (160) aufweist, der das Kugelgelenk (4) (150) radial verlängert, einen zweiten senkrechten Abschnitt (161), einen dritten Abschnitt (162), der einen Winkel von etwa 30° mit der Ebene der beiden ersten Abschnitte bildet und einen vierten Abschnitt (163) in der Ebene der drei vorher genannten Abschnitte, parallel zum zweiten Abschnitt.

18. Modulsystem zur Verkaufsförderung am Verkaufsort, nach Anspruch 13, **dadurch gekennzeichnet, dass** einer der abgewinkelten Arme flexibel ist.

19. Modulsystem zur Verkaufsförderung am Verkaufsort, nach Anspruch 13, **dadurch gekennzeichnet, dass** die Verbindung zwischen dem abgewinkelten Arm (301), der Stange (306) und dem Stützarm der Kupons (310) durch zusätzliche Elemente, mit einem Abschnitt von mindestens 4 Armen, gebildet wird.

## Claims

1. A universal device for fixing an accessory onto a support formed by a clamp having two articulated jaws (2, 3), wherein the articulation is laterally offset relative to the median plane and in that the jaws (2, 3) have cavities for receiving a ball and socket joint (4), arranged on the other side of the median transverse plane, said device comprising clamping means assuring the closure of the tip (11, 12) of the jaws (2, 3) and clamping on the ball and socket joint (4) of the rear part of the jaws (2, 3) bearing said cavities, said clamping means being disposed between the articulating means and the cavities for receiving the ball and socket joint (4) on the one hand and between the tip (11, 12) of the jaws (2, 3) and the rear part of the jaws (2, 3) on the other.

2. A universal device for fixing an accessory onto a support according to Claim 1, wherein it is formed of one single piece made of molded plastic material having two parts in the form of interlockable jaws (2, 3) connected by a resilient connection part.

3. A universal device for fixing an accessory onto a support according to Claim 1 or 2, wherein the one at least of the jaws (2, 3) has on its rear part a concave receptacle capable of co-operating with a convex extension provided on the other jaw.

4. A universal device for fixing an accessory onto a support according to Claim 3, wherein the one at least of the jaws (2, 3) has on its rear part a concave receptacle capable of co-operating with a convex extension provided on the other jaw, said extension being capable of interlocking in the cavity by a displacement in a direction perpendicular to the plane of separation of the two jaws (2, 3), the end of the concave extension co-operating with the concave cavity to form an articulating pivot of the two interlocked jaws (2, 3).

5. A universal device for fixing an accessory onto a support according to Claim 3, wherein each of the jaws (2, 3) comprises a concave cavity and a convex extension interlocking to form the articulating pivot of the jaws (2, 3).

6. A universal device for fixing an accessory onto a support according to Claim 1, wherein the front part of the jaws (2, 3) has the form of a concave tip (11, 12).

7. A universal device for fixing an accessory onto a support according to Claim 5, wherein the front part of the jaws (2, 3) has a semi-cylindrical concavity of a first radius, and has at its front part a groove of a second radius less than the first radius.

8. A universal device for fixing an accessory onto a support according to Claim 1, wherein the rear part of the jaws (2, 3) has at least one opening for passage of a connecting bolt extending the ball and socket joint (4).

9. A universal device for fixing an accessory onto a support according to Claim 1, wherein the rear part of the jaws (2, 3) has an opening allowing a tilting of the connecting bolt extending the ball and socket joint (4) with a displacement prior to clamping of the jaws (2, 3) of at least 45° in at least two perpendicular planes.

10. A universal device for fixing an accessory onto a support according to Claim 1, wherein the ball and socket joint (4) is extended by a bent connecting bolt having a first section connecting with the ball and socket joint (4), whose length is determined to enable articulation relative to the jaws (2, 3) of the clamp, a second section substantially perpendicular to the first section and a third section substantially perpendicular to the second section for connecting with a card support.

11. A universal device for fixing an accessory onto a support according to Claim 1, wherein the card support has at least one groove to receive a complementary flute of a connecting bolt extending the ball and socket joint (4).

12. A universal device for fixing an accessory onto a support according to Claim 1, wherein the two jaws (2, 3), as well as the cavity of the rear part for receiving the ball and socket joint (4) are realized in an elastomer co-injected into the jaws (2, 3) to form a resiliently deformable seating.

13. A modular system for promotion at a place of sale, **characterized in that** it is comprised of a fixing device (1) according to at least one of the above claims for fixing the system onto a support, a first bent arm (100), a coupon holder (200), and a second bent arm (300).

14. A modular system for promotion at the place of sale according to Claim 13, wherein it comprises a connecting bolt having a non-circular cross-section for connecting the ends of the bent arms.

15. A modular system for promotion at the place of sale according to Claim 14, wherein the connecting bolt has a " + " cross-section and, wherein the one at least of the ends of each bent arm (100, 300) has an opening of complementary shape.

16. A modular system for promotion at the place of sale according to Claim 15, wherein it is formed of one single piece made of molded plastic material having two parts in the form of interlockable jaws (2, 3) connected by a resilient connection part.

17. A modular system for promotion at the place of sale according to Claim 13, wherein the bent arm has a first section (160) radially extending the ball and socket joint (4) (150), a second perpendicular section (161), a third section (162) forming an angle of approximately 30° with the plane of the two first sections, and a fourth section (163) in the plane of the three preceding sections, parallel to the second section.

18. A modular system for promotion at the place of sale according to Claim 13, wherein one of the bent arms is flexible.

19. A modular system for promotion at the place of sale according to Claim 13, wherein the connection between the bent arm (301), the bolt (306) and the coupon holder (310) is realized using complementary elements having one section of at least 4 arms.
